**Europäisches Patentamt**

**European Patent Office**

**Office européen des brevets**

(11) Veröffentlichungsnummer: **0 042 914**
**B1**

(12) ## EUROPÄISCHE PATENTSCHRIFT

(45) Veröffentlichungstag der Patentschrift:
14.11.84

(51) Int. Cl.³: **F 02 D 33/00**, G 01 N 27/00

(21) Anmeldenummer: **81102370.4**

(22) Anmeldetag: **28.03.81**

(54) Einrichtung zur Regelung des Kraftstoff/Luftverhältnisses bei Brennkraftmaschinen.

(30) Priorität: **28.06.80 DE 3024607**

(43) Veröffentlichungstag der Anmeldung:
**06.01.82 Patentblatt 82/1**

(45) Bekanntmachung des Hinweises auf die Patenterteilung:
**14.11.84 Patentblatt 84/46**

(84) Benannte Vertragsstaaten:
**DE FR GB**

(56) Entgegenhaltungen:
**FR - A - 2 342 405**
**FR - A - 2 381 180**
**US - A - 3 938 075**

(73) Patentinhaber: **ROBERT BOSCH GMBH, Postfach 50, D-7000 Stuttgart 1 (DE)**

(72) Erfinder: **Drews, Ulrich, Dipl.-Ing., Pulverdingen Haus 9, D-7143 Vaihingen (DE)**
Erfinder: **Möhrle, Werner, Dipl.-Ing., Vogelsangstrasse 30B, D-7000 Stuttgart 1 (DE)**
Erfinder: **Werner, Peter, Dipl.-Ing., Im Sommerrain 15, D-7135 Wiernsheim (DE)**

## Beschreibung

### Stand der Technik

Die Erfindung geht aus von einer Einrichtung gemäss der Gattung der unabhängigen Patentansprüche 1 oder 2. Bei einer solchen Einrichtung (DE-A-27 07 383) dient die eine der Vergleichseinrichtungen dazu, festzustellen, ob das Sondensignal grösser oder kleiner ist, als ein mittlerer Spannungswert, der als den Regelpunkt bestimmender Spannungswert innerhalb des Spannungssprungs des Lambda-Sonden-Ausgangssignals bei $\lambda = 1$ liegt. Mit dem Ausgangswert dieser Vergleichseinrichtung wird die Regeleinrichtung gesteuert. Die Ausgangswerte beider Vergleichseinrichtungen dagegen stellen eine Aussage über die Betriebsbereitschaft der Lambda-Sonde dar. Diese Anordnung hat jedoch den Nachteil, dass die Schwellwerte für die Vergleichseinrichtungen und die Bezugsspannung von einem einzigen Spannungsteiler direkt abgegriffen werden, was, da die Vergleichseinrichtungen einen Strom entnehmen, die Höhe der Bezugsspannung beeinflusst und somit auch den Regelpunkt. Ferner wird der Einstellbereich der Bezugsspannung durch die Lage der Schwellwerte begrenzt und der Belastungswiderstand, über den die Bezugsspannung auf den Sondenausgang gelegt wird, in seinem Wert fixiert. Wegen der Empfindlichkeit der Bezugsspannung auf die Stromentnahme aus dem Spannungsteiler sind die Möglichkeiten beschränkt, die resultierende Spannung am Lambda-Sonden-Ausgang durch zusätzliche Auswerteeinrichtungen zu verwerten.

### Vorteile der Erfindung

Die erfindungsgemässe Einrichtung zur Regelung des Kraftstoff/Luftverhältnisses mit den kennzeichnenden Merkmalen der unabhängigen Patentansprüche 1 oder 2 hat demgegenüber den Vorteil, dass sich Bezugsspannungswerte einstellen lassen, die unabhängig von der Lage der Schwellwerte der Vergleichseinrichtungen und im wesentlichen unabhängig von der Stromentnahme am Hauptspannungsteiler sind.

### Zeichnung

Zwei Ausführungsbeispiele der Erfindung sind in der Zeichnung dargestellt und werden in der nachfolgenden Beschreibung näher erläutert. Es zeigen Fig. 1 ein erstes Ausführungsbeispiel mit einem zum Hauptspannungsteiler parallelen Spannungsteiler zur Erzeugung der Bezugsspannung, Fig. 2 ein zweites Ausführungsbeispiel mit einem Hauptspannungsteiler und zwei parallelen Spannungsteilern zur jeweils getrennten Erzeugung der Bezugsspannung und der Schwellwerte der Vergleichseinrichtungen, Fig. 3 ein Diagramm des Sondenausgangssignals und Fig. 4 eine Ausführung der Auswerteschaltung.

### Beschreibung des Ausführungsbeispiels

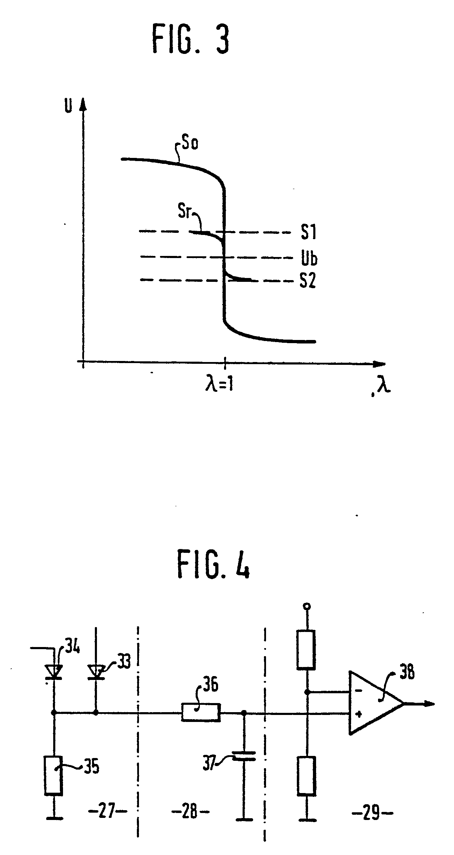

Die erfindungsgemässe Lösung ist eine Weiterentwicklung der in der DE-A-27 07 383 beschriebenen Vorrichtung. Der wesentliche Bestandteil der erfindungsgemässen Einrichtung ist eine Lambda-Sonde bekannter Bauart, die in das Abgassystem einer Brennkraftmaschine eingesetzt ist, und von den aus den Verbrennungsvorgängen in den Zylindern der Brennkraftmaschine resultierenden Abgasen umströmt wird. Die Sonde besteht aus einem Festelektrolyten, beispielsweise Zirkondioxid, der beiderseitig kontaktiert ist. Die eine Seite des Zirkondioxidkörpers ist dem Abgas und die andere Seite einem Bezugsmedium ausgesetzt. Infolge einer Sauerstoffpartialdruckdifferenz zwischen den Drücken an den beiden Oberflächen des Festelektrolytkörpers ergibt sich an den Kontaktierungen eine Potentialdifferenz, deren Wert für verschiedene Kraftstoff-Luftverhältnisse $\lambda$ in Fig. 3 dargestellt ist. Die Ausgangsspannung der Lambda-Sonde ändert sich bei einer Luftzahl $\lambda = 1$ sprungartig. Bei Luftzahlen $\lambda < 1$ nimmt die Ausgangsspannung an der Lambda-Sonde Werte von 750-900 Millivolt an, vorausgesetzt, dass die $\lambda$-Sonde sich im betriebswarmen Zustand befindet. Bei Luftzahlen $\lambda > 1$ beträgt die Ausgangsspannung ca. 100 Millivolt.

Die $\lambda$-Sonde weist jedoch den Nachteil auf, dass im kalten Zustand der Innenwiderstand der Sonde extrem hoch ist, so dass sich am Ausgang der $\lambda$-Sonde kein für eine Regelung verwertbares Spannungssignal, insbesondere kein deutlicher Spannungssprung erzielen lässt.

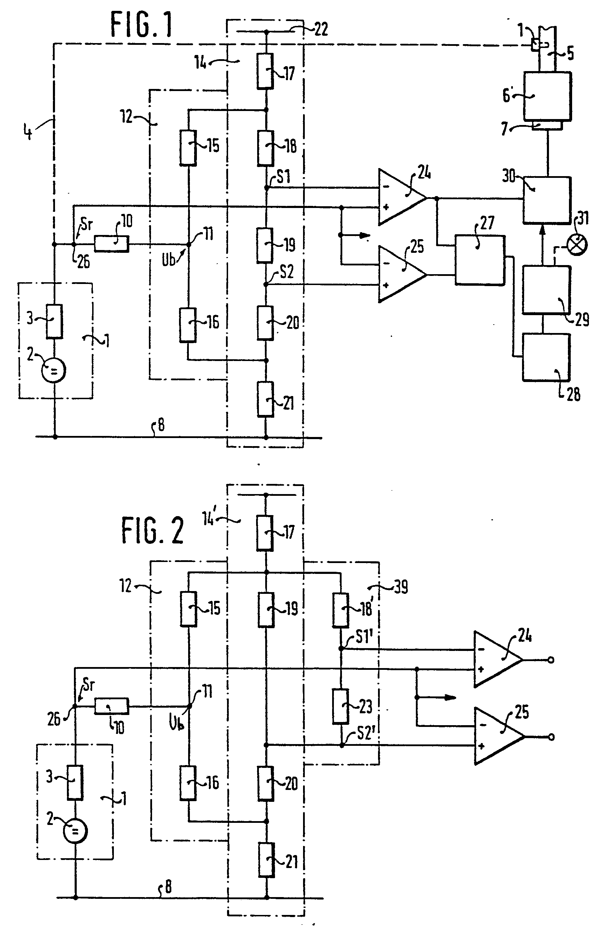

In Fig. 1 ist die $\lambda$-Sonde 1 als Ersatzschaltbild wiedergegeben, bestehend aus einer Spannungsquelle (Urspannung) 2 und dem Innenwiderstand 3. Die gestrichelte Verbindung 4 deutet an, dass die $\lambda$-Sonde 1 in das Abgassystem 5 einer Brennkraftmaschine 6, die hier nur schematisch dargestellt ist, eingesetzt ist. Die Brennkraftmaschine wird mittels einer Kraftstoff/Luftdosiereinrichtung 7 mit Betriebsgemisch aus Kraftstoff und Luft versorgt, das in den Brennräumen der Brennkraftmaschine zur Verbrennung gelangt. Das Verhältnis von Kraftstoff zu Luft kann in der Kraftstoff/Luftdosiereinrichtung gesteuert eingestellt werden und zudem durch die in Fig. 1 dargestellte Vorrichtung korrigiert werden.

Im Interesse der Schadstoffreiheit der Abgase wird es angestrebt, die überlagernde Regeleinrichtung für die Kraftstoff- bzw. Luftdosierung möglichst frühzeitig nach Inbetriebnahme der Brennkraftmaschine zur Wirkung kommen zu lassen. Zur Erkennung, wann ein gerade noch mit ausreichender Sicherheit von der Regeleinrichtung verwertbares Sondensignal auftritt, ist in der DE-A-27 07 383 eine Schaltung vorgeschlagen worden, mit der eine sich mit der Grösse des Innenwiderstands ändernde Ausgangsspannung der Sonde mit Hilfe von Schwellwertschaltern abgetastet wird, wobei nach Überschreiten der festgelegten Schwellwerte ein Signal erzeugt wird, das die Regelung in Betrieb nimmt. Fig. 1 zeigt die wesentlichen Teile dieser Schaltung.

Der eine Ausgang der $\lambda$-Sonde 1 ist mit der Masseleitung 8 der Spannungsversorgungseinrichtung verbunden, während der andere Ausgang 26 über einen Widerstand 10 mit dem Mittelabgriff 11 eines Spannungsteilers 12 aus den Widerständen 15 und 16 verbunden ist. Dieser Spannungsteiler zweigt von einem Hauptspannungsteiler 14 ab, der in Reihe liegende Widerstände 17, 18, 19, 20 und 21 aufweist und zwischen der positiven Versorgungsleitung 22 und der Masseleitung 8 liegt. Der Spannungsteiler 12 liegt dabei parallel zu den mittleren Widerständen 18, 19 und 20 des Hauptspannungsteilers 14. Der Hauptspannungsteiler wird von einer konstanten Spannungsquelle bzw. von einer Konstantstromquelle versorgt.

Zwischen dem mittleren Widerstand 19 und dem benachbarten Widerstand 18 des Hauptspannungsteilers 14 befindet sich ein Spannungsabgriff $S_1$, der mit dem invertierenden Eingang einer ersten Vergleichseinrichtung 24 verbunden ist, die im ausgeführten Beispiel als vereinfacht dargestellter Operationsverstärker gezeigt ist. Zwischen dem mittleren Widerstand 19 und dem benachbarten Widerstand 20 des Hauptspannungsteilers 14 befindet sich ein Spannungsabgriff $S_2$, der mit dem nicht invertierenden Eingang einer zweiten Vergleichseinrichtung 25 verbunden ist, die gleicherweise als Operationsverstärker ausgeführt ist. Die Spannungsabgriffe $S_1$ und $S_2$ geben die Schwellwertspannungen für die genannten Vergleichseinrichtungen 24 und 25. Der nicht invertierende Eingang der ersten Vergleichseinrichtung 24 und der invertierende Eingang der zweiten Vergleichseinrichtung 25 sind gemeinsam mit dem Ausgang 26 der λ-Sonde 1 verbunden.

Die Ausgänge der ersten Vergleichseinrichtung 24 und der zweiten Vergleichseinrichtung 25 führen zu einer logischen Verknüpfungsschaltung 27, deren Ausgang über ein Zeitglied 28 einer Auswerteschaltung 29 zugeführt wird. Der Ausgang der Auswerteschaltung wirkt auf eine Regelschaltung 30 ein und kann zusätzlich eine Warneinrichtung 31 ansteuern. Weiterhin ist der Ausgang der ersten Vergleichseinrichtung direkt mit der Regelschaltung 30 verbunden, die ein Steuersignal für die Kraftstoff/Luftdosiereinrichtung 7 abgibt.

Die beschriebene Einrichtung arbeitet folgendermassen: Am Mittelabgriff 11 des Spannungsteilers 12 steht eine konstante Bezugsspannung $U_b$ zur Verfügung, die gleichgepolt ist, wie die Sondenspannung. Die Bezugsspannung ist nun über den Widerstand 10 an den Sondenausgang 26 gelegt und somit der Sondenurspannung 2 entgegengeschaltet. Am Sondenausgang 26 ergibt sich dann eine aus beiden Spannungen resultierende Spannung $S_r$, die, solange kein Strom zwischen λ-Sonde und Bezugsspannungspunkt fliesst, den Wert der Bezugsspannung $U_b$ annimmt. Bei abweichender Sondenausgangsspannung fliesst entweder ein Strom über den Widerstand 10 und den Innenwiderstand 3 in die Sonde hinein oder aus dieser heraus. Am Sondenausgang 26 ergibt sich dann eine Spannung $S_r$, die zwischen dem Bezugsspannungswert und der höchsten Sondenurspannung 2 bzw. der tiefsten Sondenurspannung 2 liegt. Diese Spannung ist abhängig von dem Innenwiderstand der λ-Sonde, der den Stromfluss durch die λ-Sonde stark beeinflusst.

Durch die Entgegenschaltung der Bezugsspannung $U_b$ über den konstanten Widerstand 10 wird erreicht, dass mit abnehmenden Innenwiderstand 3 Spannungswerte am Sondenausgang 26 abgenommen werden können, die mit steigender Sondentemperatur zunehmend von der Bezugsspannung abweichen, wobei die oberen und die unteren Werte symmetrisch zur Bezugsspannung liegen können. Ab einer bestimmten Abweichung $|\triangle U| = |S_r - u_b|$, die z.B. 25 Millivolt betragen kann, kann das Sondenausgangssignal als für eine nachgeschaltete Regelung verwertbar angesehen werden. Der Sondeninnenwiderstand 3 ist dann klein genug, so dass das Sondensignal fehlerfrei von einer nachgeschalteten Vergleichseinrichtung zu Regelzwecken ausgewertet werden kann.

Die genannten bestimmten Abweichungen $\triangle U$ von der Bezugsspannung $U_b$ sind durch die Schwellwerte $S_1$ und $S_2$ des Spannungsteilers 14 festgelegt, der Innenwiderstand 3 der Sonde, bei dem die Regelschaltung einschaltet, ausserdem noch durch den Widerstandswert von 10. Die erste Vergleichseinrichtung 24 und die zweite Vergleichseinrichtung 25 dienen dabei zur Erzeugung eines logisch auswertbaren Signals aus der am Sondenausgang 26 anstehenden Spannung. Überschreitet die Spannung am Sondenausgang 26 den Schwellwert $S_1$, so gibt die erste Vergleichseinrichtung 24 ein Signal logisch 1 ab und die zweite Vergleichseinrichtung 25 ein Signal logisch 0 ab. Ist umgekehrt die Spannung am Sondenausgang 26 kleiner als der Schwellwert $S_2$, so ist der Ausgang der ersten Vergleichseinrichtung logisch 0 und der Ausgang der zweiten Vergleichseinrichtung logisch 1. Diese Ausgangssignale werden der logischen Verknüpfungsschaltung 27 zugeführt, die in einer Ausführung in Fig. 4 näher dargestellt ist. Die Fig. 4 enthält ferner das Zeitglied 28 und die Auswerteschaltung 29.

Fig. 3 macht anhand eines Diagramms die Wirkungsweise der obenbeschriebenen Überwachungseinrichtung deutlich. Mit $S_0$ ist die Sondenurspannung bezeichnet, die, wie beschrieben, bei Lambdawerten λ < 1 einen grossen Wert annimmt, bei λ = 1 sprungartig abfällt und bei λ-Werten > 1 einen niedrigen Spannungswert aufweist. Mit $S_r$ ist die am Sondenausgang auftretende resultierende Spannung und zwar bei kalter λ-Sonde bezeichnet. Diese Spannung liegt für den dargestellten Zustand der λ-Sonde unterhalb des Schwellwertes $S_1$ bzw. oberhalb des Schwellwertes $S_2$.

Am Ausgang der ersten Vergleichseinrichtung 24 und am Ausgang der zweiten Vergleichseinrichtung 25 treten somit logische Signale gemäss folgender Tabelle auf:

**0 042 914**

| Sonde | $S_o$ | 1. Op. (24) | 2. Op (25) |
|-------|-------|-------------|------------|
| kalt  | $S_o > U_b$ | 0 | 0 |
| kalt  | $S_o < U_b$ | 0 | 0 |
| warm  | $S_o > U_b$ | 1 | 0 |
| warm  | $S_o < U_b$ | 0 | 1 |

Die Werte für Sonde kalt am Ausgang der Operationsverstärker gelten übrigens auch für den Fall, dass die Verbindung zwischen λ-Sonde und Sondenanschluss 9 unterbrochen ist.

Man ersieht aus der Tabelle, dass bei 0 Signal an den Ausgängen der 1. und der 2. Vergleichseinrichtung die λ-Sonde nicht betriebsbereit ist, und dass bei unterschiedlichen Ausgängen die λ-Sonde betriebsbereit ist. Die Ausgangssignale werden im ausgeführten Beispiel nach Fig. 4 mittels einer ODER-Schaltung ausgewertet. Die erste Diode 33 der ODER-Schaltung ist dabei an den Ausgang der ersten Vergleicheinrichtung 24 angeschlossen, während die zweite Diode 34 der ODER-Schaltung an den Ausgang der zweiten Vergleichseinrichtung 25 angeschlossen ist. Die Kathoden beider Dioden liegen einerseits über einen Widerstand 35 an Masse und sind andererseits über einen Widerstand 36 mit einem Kondensator 37 verbunden, der andererseits ebenfalls an Masse liegt. Bei betriebsbereiter λ-Sonde wird durch diese Schaltung das Zeitglied bestehend aus dem Widerstand 36 mit und dem Kondensator 37 im Wechsel über Dioden 33 bzw. 34 mit einem 1-Signal beaufschlagt, so dass sich der Kondensator 37 über den Widerstand 36 aufladen kann, oder dass der Kondensator, einmal aufgeladen, im aufgeladenen Zustand verbleibt. Tritt kein 1-Signal an einem der Operationsverstärker auf, so kann sich der Kondensator über die Widerstände 35 und 36 entladen, wobei die Kapazität und die Widerstandswerte die Entladezeit bestimmen.

Die Auswerteeinrichtung 29 besteht aus einem Komparator 38, an dessen einem Eingang ein Referenzspannungswert angelegt ist und an dessen anderem Eingang die Kondensatorspannung anliegt. Mit Hilfe des Referenzwertes kann ein bestimmter Teil der Entladungszeit des Zeitglieds als Verzögerungszeit eingestellt werden, ab der nach dem letzten Auftreten eines 1-Signales an einer der beiden Dioden 33 oder 34 der Komparator 38 umschaltet und ein Steuersignal erzeugt, das in geeigneter Weise in die Regelschaltung 30 eingreift und/oder die Warneinrichtung 31 ansteuert. Mit diesem Umschalten des Komparators wird die Regeleinrichtung ausser Betrieb gesetzt und das durch die Kraftstoff-Luftdosiereinrichtung 7 der Brennkraftmaschine zugeführte Betriebsgemisch nur noch gesteuert.

Dadurch, dass für die Erzeugung der Bezugsspannung $U_b$ ein gesonderter zweiter Spannungsteiler 12 neben dem Hauptspannungsteiler 14 vorgesehen ist, kann eine Rückwirkung der Eingangsströme beider Vergleichseinrichtungen 24 und 25 auf die Bezugsspannung $U_b$ vermieden werden. Die Widerstandsdimensionierung ist dabei so, dass der Widerstand 10 zwischen Sondenausgang 26 und zweiten Spannungsteiler 12 wesentlich grösser ist als die Widerstände 15 und 16 des zweiten Spannungsteilers 12. Weiterhin sind die Widerstände 15 und 16 des zweiten Spannungsteilers wesentlich grösser als die Widerstände 18, 19 und 20 des Hauptspannungsteilers. Aufgrund dieser Dimensionierung wird der gewünschte Erfolg, eine relativ stabile Bezugsspannung, erreicht. Diese Anordnung hat den weiteren Vorteil, dass die Lage der Bezugsspannung letztlich unabhängig von den Schwellwerten $S_1$ und $S_2$ ist, d.h. die Bezugsspannung $U_b$ kann auch oberhalb oder unterhalb dieser Potentiale liegen.

Eine weiterführende Ausgestaltung ist der Figur 2 zu entnehmen, die im wesentlichen gleich aufgebaut ist wie die Ausgestaltung nach Fig. 1. Es wurde daher auf die Wiedergabe der den Vergleichseinrichtungen nachgeschalteten Einrichtungen verzichtet. Wie bei der Schaltung gemäss Fig. 1 ist auch hier eine λ-Sonde vorgesehen, der über den Widerstand 10 eine am Punkt 11 des Spannungsteilers 12 abgenommene Bezugsspannung $U_b$ entgegengeschaltet wird. Am Sondenausgang 26 wird in gleicher Weise wie im vorstehenden Beispiel beschrieben, eine resultierende Spannung $S_r$ abgegriffen, die von den nachgeschalteten Vergleichseinrichtungen 24 und 25 ausgewertet wird. Abweichend vom ersten Ausführungsbeispiel besteht hier der Hauptspannungsteiler 14' nur noch aus den in Reihe geschalteten Widerständen 17, 19, 20 und 21, wobei der zweite Spannungsteiler 12 vom Verbindungspunkt zwischen den Widerständen 17 und 19 zum Verbindungspunkt zwischen den Widerständen 20 und 21 führt. Vom Hauptspannungsteiler 14' zweigt ferner ein dritter Spannungsteiler 39 ab mit in Reihe geschalteten Widerständen 18' und 23, der parallel zum Widerstand 19 des Hauptspannungsteilers 14' liegt. Zwischen den Widerständen 18' und 23 des dritten Spannungsteilers wird nun am Abgriff $S_1'$ der Schwellwert für die erste Vergleichseinrichtung 24 abgenommen, während am Ende des zweiten Spannungsteilers 39 bzw. zwischen den Widerständen 19 und 20 des Hauptspannungsteilers 14' der Schwellwert für den nicht invertierenden Eingang der zweiten Vergleichseinrichtung 25 am Abgriffspunkt $S_2'$ abgenommen wird. Wie im ersten Ausführungsbeispiel ist auch hier der Widerstand 10 wesentlich grösser als die Widerstände des zweiten Spannungsteilers 12. Ferner sind sowohl die Widerstände des zweiten Spannungsteilers 12 als auch die Widerstände des dritten Spannungsteilers 39 wesentlich grösser als beim dazu parallelen Hauptspannungsteilerstück aus den Widerständen 19 und 20.

**Patentansprüche**

1. Einrichtung zur Regelung des Kraftstoff-Luft-Verhältnisses des in einer Brennkraftmaschine zur Verbrennung kommenden Betriebsgemisches unter Verwendung einer λ-Sonde (1), die mit einer Regeleinrichtung zur Beeinflussung des Kraftstoff-Luft-Verhältnisses verbunden ist, sowie mit einer Einrichtung zur Überwachung der Betriebsbereitschaft der λ-Sonde (1), wobei zur Erfassung des die Sondenbetriebsbereitschaft beeinflussenden Sondeninnenwiderstandes (3) eine Bezugsspannung ($U_b$) unter Zwischenschaltung eines Widerstandes (10) der Sondenspannung entgegengeschaltet wird und die resultierende Spannung ($S_r$) am λ-Sondenausgang (26) auf einen die Betriebsbereitschaft der λ-Sonde (1) ansteigenden Mindesthub mittels wenigstens zweier Vergleichseinrichtungen (24, 25) mit verschiedenen Schwellwerten ($S_1$, $S_2$) überprüfbar ist, deren Ausgänge mit einer logischen Verknüpfungsschaltung (27) verbunden sind, deren Ausgangssignal als Mass für die Betriebsbereitschaft durch eine Auswerteschaltung verwertbar ist, durch welche ein erstes, die Betriebsbereitschaft anzeigendes und/oder den Betrieb der Regeleinrichtung herstellendes und ein zweites, die Nichtbetriebsbereitschaft der λ-Sonde (1) anzeigendes und/oder den Betrieb der Regeleinrichtung ausschaltendes und auf Steuern umschaltendes Signal erzeugt wird, dadurch gekennzeichnet, dass zur Bereitstellung der Bezugsspannung ($U_b$), die unabhängig von der Wahl der Schwellwerte ($S_1$, $S_2$) der Vergleichseinrichtungen (24, 25) und weitgehendst unabhängig von der Stromaufnahme desselben ist, parallel zu einem Hauptspannungsteiler (14), der mit der Versorgungsspannung der Einrichtung beaufschlagt ist, ein zweiter Spannungsteiler (12) gelegt ist, dessen Abgriff (11) über den Widerstand (10) mit dem Ausgang (26) der λ-Sonde (1) verbunden ist, wobei von dem dazu parallelen Hauptspannungsteiler (18, 19, 20) die Schwellwertspannungen ($S_1$, $S_2$) für die Vergleichseinrichtung (24, 25) abnehmbar sind und wobei die Widerstände (18, 19, 20) des Hauptspannungsteilers (14) wesentlich niederohmiger als die Widerstände (15, 16) des zweiten Spannungsteilers (12) und diese wesentlich niederohmiger als der Widerstand (10) dimensioniert sind.

2. Einrichtung zur Regelung des Kraftstoff-Luft-Verhältnisses des in einer Brennkraftmaschine zur Verbrennung kommenden Betriebsgemisches unter Verwendung einer λ-Sonde (1), die mit einer Regeleinrichtung zur Beeinflussung des Kraftstoff-Luft-Verhältnisses verbunden ist, sowie mit einer Einrichtung zur Überwachung der Betriebsbereitschaft der λ-Sonde (1), wobei zur Erfassung des die Sondenbetriebsbereitschaft beeinflussenden Sondeninnenwiderstandes (3) eine Bezugsspannung ($U_b$) unter Zwischenschaltung eines Widerstandes (10) der Sondenspannung entgegengeschaltet wird und die resultierende Spannung ($S_r$) am λ-Sondenausgang (26) auf einen die Betriebsbereitschaft der λ-Sonde (1) anzeigenden Mindesthub mittels wenigstens zweier Vergleichseinrichtungen (24, 25) mit verschiedenen Schwellwerten ($S_1$, $S_2$) überprüfbar ist, deren Ausgänge mit einer logischen Verknüpfungsschaltung (27) verbunden sind, deren Ausgangssignal als Mass für die Betriebsbereitschaft durch eine Auswerteschaltung verwertbar ist, durch welche ein erstes, die Betriebsbereitschaft anzeigendes und/oder den Betrieb der Regeleinrichtung herstellendes und ein zweites, die Nichtbetriebsbereitschaft der λ-Sonde (1) anzeigendes und/oder den Betrieb der Regeleinrichtung ausschaltendes und auf Steuern umschaltendes Signal erzeugt wird, dadurch gekennzeichnet, dass zur Bereitstellung der Bezugsspannung ($U_b$), die unabhängig von der Wahl der Schwellwerte ($S_1$, $S_2$) der Vergleichseinrichtungen (24, 25) und weitgehendst unabhängig von der Stromaufnahme desselben ist, parallel zu einem Hauptspannungsteiler (14'), der mit der Versorgungsspannung der Einrichtung beaufschlagt ist, ein zweiter Spannungsteiler (12) gelegt ist, dessen Abgriff (11) über den Widerstand (10) mit dem Ausgang (26) der λ-Sonde (1) verbunden ist, und dass parallel zum Widerstand (19) des Hauptspannungsteilers (14') ein dritter Spannungsteiler (39) gelegt ist, an dem die Schwellwertspannungen ($S_1$', $S_2$') für die Vergleichseinrichtungen (24, 25) abnehmbar sind und wobei die Widerstände (19 20) des Hauptspannungsteilers (14') wesentlich niederohmiger als die Widerstände (15, 16) bzw. (18', 23) des zweiten Spannungsteilers (12) bzw. des dritten Spannungsteilers (39) und diese wesentlich niederohmiger als der Widerstand (10) dimensioniert sind.

**Revendications**

1. Installation pour la régulation du rapport carburant/air du mélange arrivant pour être brûlé dans un moteur à combustion interne, en utilisant une sonde lambda (1) qui est reliée à une installation de régulation pour agir sur le rapport carburant/air, ainsi qu'avec un dispositif pour surveiller l'aptitude au fonctionnement de la sonde lambda (1), installation dans laquelle pour détecter la résistance interne (3) de la sonde influençant l'aptitude de fonctionnement de cette sonde, une tension de référence ($U_b$) est branchée en opposition avec interposition d'une résistance (10) sur la tension de la sonde, et la tension résultante ($S_r$) à la sortie (26) de la sonde lambda est susceptible d'être contrôlée en ce qui concerne un accroissement minimum indiquant l'aptitude au fonctionnement de la sonde lambda (1) au moyen d'au moins deux dispositifs de comparaison (24, 25) avec des valeurs de seuil ($S_1$, $S_2$) différentes, les sorties de ces dispositifs étant reliées à un circuit logique de combinaison (27) dont le signal de sortie est susceptible d'être exploité par un circuit d'exploitation comme une mesure de l'aptitude au fonctionnement, par l'intermédiaire de laquelle est engendré un premier signal indiquant l'aptitude au fonctionnement et/ou mettant en fonctionnement l'installation de régulation, ainsi qu'un second signal indiquant la non aptitude au fonctionnement de la sonde lambda (1) et/ou mettant hors de fonctionnement l'installation de régulation avec commutation sur commande, installation caractérisée en ce que, pour fournir la tension de référence ($U_b$), qui est indépendante du choix des valeurs de seuil (S$_1$, S$_2$) des dispositifs de comparaison (24, 25) et qui est, dans une large mesure indépendante du prélèvement de courant de ces dispositifs, il est prévu en parallèle à un diviseur principal de tension (14) auquel est appliquée la tension d'alimentation de l'installation, un second diviseur de tension (12) dont la prise (11) est reliée par l'intermédiaire de la résistance (10) à la sortie (26) de la sonde lambda (1); les tensions de valeur de seuil (S$_1$, S$_2$) pour les dispositifs de comparaison (24, 25) étant susceptibles d'être prélevées à partir du diviseur principal de tension (18, 19, 20) et les résistances (18, 19, 20) du diviseur principal de tension (14) ayant une valeur ohmique notablement inférieure à celle des résistances (15, 16) du second diviseur de tension (12) et celles-ci ayant des valeurs ohmiques notablement inférieures à celles de la résistance (10).

2. Installation pour la régulation du rapport carburant/air du mélange arrivant pour être brûlé dans un moteur à combustion interne, en utilisant une sonde lambda (1) qui est reliée à une installation de régulation pour agir sur le rapport carburant/air, ainsi qu'avec un dispositif pour surveiller l'aptitude au fonctionnement de la sonde lambda (1), installation dans laquelle, pour détecter la résistance interne (3) de la sonde influençant l'aptitude de fonctionnement de cette sonde, une tension de référence (U$_b$) est branchée en oppositon avec interposition d'une résistance (10) sur la tension de la sonde, et la tension, résultante (S$_r$) à la sortie (26) de la sonde lambda est susceptible d'être contrôlée en ce qui concerne un accroissement minimum indiquant l'aptitude au fonctionnement de la sonde lambda (1) au moyen d'au moins deux dispositifs de comparaison (24, 25) avec des valeurs de seuil (S$_1$, S$_2$) différentes, les sorties de ces dispositifs étant reliées à un circuit logique de combinaison (27) dont le signal de sortie est susceptible d'être exploité par un circuit d'exploitation comme une mesure de l'aptitude au fonctionnement, par l'intermédiaire de laquelle est engendré un premier signal indiquant l'aptitude au fonctionnement et/ou mettant en fonctionnement l'installation de régulation, ainsi qu'un second signal indiquant la non aptitude au fonctionnement de la sonde lambda (1) et/ou mettant hors de fonctionnement l'installation de régulation avec commutation sur commande, installation caractérisée en ce que, pour fournir la tension de référence (U$_b$) qui est indépendante du choix des valeurs de seuil (S$_1$, S$_2$) des dispositifs de comparaison (24, 25) et qui est dans une large mesure indépendant du prélèvement de courant de ces dispositifs, il est prévu en parallèle à un diviseur principal de tension (14') auquel est appliquée la tension d'alimentation de l'installation, un second diviseur de tension (12) dont la prise (11) est reliée par l'intermédiaire de la résistance (10) à la sortie (26) de la sonde lambda (1), tandis qu'il est prévu en parallèle sur la résistance (19) du diviseur principal de tension (14') un troisième diviseur de tension (39), sur lequel sont susceptibles d'être prélevées les tensions de valeur de seuil (S$_1$',

S$_2$') pour les dispositifs de comparaisons (24, 25), les résistances (19, 20) du diviseur principal de tension (14') ayant une valeur ohmique notablement inférieure à celle des résistances (15, 16) ou bien (18', 23) du second diviseur de tension (12) ou bien du troisième diviseur de tension (39) et ces dernières étant d'une valeur ohmique notablement inférieure à celle de la résistance (10).

**Claims**

1. Device for regulating the fuel/air ratio of the operating mixture undergoing combustion in an internal-combustion engine, by the use of a λ probe (1) which is connected to a regulating device for influencing the fuel/air ratio, and with a device for monitoring the operational readiness of the λ probe (1), and in which, to detect the internal resistance (3) of the probe, influencing the operational readiness of the probe, a reference voltage (U$_b$) is opposed to the probe voltage, a resistor (10) being inserted, and the resultant voltage (S$_r$) at the λ probe output (26) can be checked for a minimum swing indicating the operational readiness of the λ probe (1), by means of at least two comparator devices (24, 25) with different threshold values (S$_1$, S$_2$), the outputs of which are connected to a logical switching circuit (27), the output signal of which can be used as a criterion for operational readiness by an evaluation circuit which generates a first signal, indicating operational readiness and/or rendering the regulating device operative, and a second signal which indicates that the λ probe (1) is not ready for operation and/or renders the regulating device inoperative and which changes over to control, characterised in that, parallel to a main voltage divider (14) subjected to the supply voltage of the device, there is a second voltage divider (12) for providing the reference voltage (U$_b$) which is independent of the choice of threshold values (S$_1$, S$_2$) of the comparator devices (24, 25) and is very largely independent of the current consumption of the said main voltage divider, the tap (11) of the said second voltage divider being connected via the resistor (10) to the output (26) of the λ probe (1), and the threshold voltages (S$_1$, S$_2$) for the comparator devices (24, 25) can be taken from the parallel main voltage divider (18, 19, 20), and the resistors (18, 19, 20) of the main voltage divider (14) are of substantially lower resistance than the resistors (15, 16) of the second voltage divider (12), the latter resistor having substantially lower resistance than the resistor (10).

2. Device for regulating the fuel/air ratio of the operating mixture undergoing combustion in an internalcombustion engine, by the use of a λ probe (1) which is connected to a regulating device for influencing the fuel/air ratio, and with a device for monitoring the operational readiness of the λ probe (1), and in which, to detect the internal resistance (3) probe, influencing the operational readiness of the probe, a reference voltage (U$_b$) is opposed to the probe voltage a resistor (10) being inserted, and the resultant voltage (S$_r$)

at the λ probe output (26) can be checked for a minimum swing indicating the operational readiness of the λ probe (1), by means of at least two comparator devices (24, 25) with different threshold values ($S_1$, $S_2$), the outputs of which are connected to a logical switching circuit (27), the output signal of which can be used as a criterion for operational readiness by an evaluation circuit which generates a first signal, indicating operational readiness and/or rendering the regulating device operative, and a second signal which indicates that the λ probe (1) is not ready for operation and/or renders the regulating device inoperative and which changes over to control, characterised in that, parallel to a main voltage divider (14') subjected to the supply voltage of the device, there is a second voltage divider (12) for providing the reference voltage ($U_b$) which is independent of the choice of threshold values ($S_1$, $S_2$) of the comparator devices (24, 25) and is very largely independent of the current consumption of the said main voltage divider, the tap (11) of the said second voltage divider being connected via the resistor (10) to the output (26) of the λ probe (1), and in that parallel with the resistor (19) of the main voltage divider (14') is a third voltage divider (39), at which the threshold voltages ($S_1'$, $S_2'$) for the comparator devices (24, 25) can be taken off, and the resistors (19, 20) of the main voltage divider (14') are of substantially lower resistance than the resistors (15, 16) or (18', 23) of the second voltage divider (12) or third voltage divider (39) respectively, the latter resistors having substantially lower resistance than the resistor (10).

FIG.1

FIG. 2

FIG. 3

FIG. 4